(19) Europäisches Patentamt / European Patent Office / Office européen des brevets

(11) **EP 4 361 562 B1**

(12) **EUROPEAN PATENT SPECIFICATION**

(45) Date of publication and mention of the grant of the patent:
**29.04.2026 Bulletin 2026/18**

(21) Application number: **23194687.2**

(22) Date of filing: **31.08.2023**

(51) International Patent Classification (IPC):
**G01C 21/00** *(2006.01)*

(52) Cooperative Patent Classification (CPC):
**G01C 25/005; G01B 11/272; G01C 21/025; G01C 21/1656**

(54) **ALIGNMENT OF A COORDINATE FRAME WITH A BORESIGHT AXIS OF AN OPTICAL TRACKING DEVICE**

**AUSRICHTUNG EINES KOORDINATENRAHMENS MIT EINER VISIERACHSE EINER OPTISCHEN VERFOLGUNGSVORRICHTUNG**

**ALIGNEMENT D'UN CADRE DE COORDONNÉES AVEC UN AXE DE VISÉE D'UN DISPOSITIF DE SUIVI OPTIQUE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.09.2022 US 202217901255**

(43) Date of publication of application:
**01.05.2024 Bulletin 2024/18**

(73) Proprietor: **Northrop Grumman Systems Corporation**
**Falls Church, VA 22042-4511 (US)**

(72) Inventors:
• **TAZARTES, Daniel A.**
**West Hills, 91304 (US)**
• **DAHLEN, Neal Joseph**
**Marshfield, 02050 (US)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
WO-A1-2021/096812       US-A- 5 672 872
US-A1- 2002 154 293     US-A1- 2013 139 566

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This description relates generally to sensor systems, and more particularly to alignment of a coordinate frame with a boresight axis of an optical tracking device.

BACKGROUND

Navigation systems can be implemented for a variety of purposes, and can be incorporated on a variety of different types of vehicles or other movable platforms to provide information about directional heading and orientation based on inertial sensors (e.g., gyroscopes, accelerometers, magnetometers, etc.). Some navigation systems implement optical tracking devices (e.g., star trackers) that implement a telescope or other optical device to provide stellar/celestial observations to aid in navigation. The telescope and an associated inertial navigation system (INS) can be mounted on a common structure. As an example, the entire structure could be mounted on one or more gimbals (e.g., azimuth and elevation) to allow for pointing to various stars and objects in the sky.

The telescope data can provide line-of-sight information as to the orientation of the system relative to the stars and/or satellites with known orbits that are observable. In turn, the line-of-sight information can be used to correct navigation system errors, such as attitude or position errors. However, if the angular alignment of the co-mounted INS and telescope assemblies is not perfect, then alignment errors may be erroneously misinterpreted as errors in attitude or position of the movable platform. Further, if the INS attitude is used to point the telescope, then errors in pointing can occur, which can render it more difficult and time-consuming to acquire and make the stellar/celestial observations.

US 5,672,872 A discloses a technique for boresight alignment, according to which there is no provision of a reference image corresponding to a structure having a known position relative to a geodetic coordinate frame based on a position reference.

SUMMARY

The invention is defined in the independent claims.

One example includes a navigation system. The navigation system includes an inertial navigation system (INS) that is configured to provide a coordinate frame corresponding to an inertial reference of the INS relative to a geodetic coordinate system. The coordinate frame includes a reference axis having a reference orientation relative to physical axes of the INS. The system also includes an optical tracking device configured to obtain a reference image to determine an orientation of a boresight axis of the optical tracking device. The system further includes an alignment controller configured to compare the reference axis based on the coordinate frame and the boresight axis based on the reference image to determine a three-dimensional angular misalignment between the reference axis and the boresight axis, and to adjust the reference orientation to provide an adjusted reference axis that is aligned with the boresight axis based on the determined three-dimensional angular misalignment.

Another example described herein includes a method for aligning a boresight axis of an optical tracking device with a coordinate frame of an INS. The method includes obtaining a coordinate frame corresponding to an inertial reference of the INS relative to a geodetic coordinate system. The coordinate frame comprising a reference axis having a reference orientation relative to physical axes of the INS. The method also includes obtaining a reference image via the optical tracking device to determine an orientation of a boresight axis of the optical tracking device. The method also includes implementing an alignment algorithm to calculate a three-dimensional misalignment angle between the reference axis and the boresight axis based on the coordinate frame and the reference image. The method further includes adjusting the reference orientation in the memory to provide an adjusted reference axis to the boresight axis by the three-dimensional misalignment angle.

Another example described herein includes a navigation system. The navigation system includes an inertial navigation system (INS) that is configured to provide a coordinate frame corresponding to an inertial reference of the INS relative to a geodetic coordinate system. The coordinate frame includes a reference axis having a reference orientation relative to physical axes of the INS. The system also includes an optical tracking device configured to obtain a reference image to determine an orientation of a boresight axis of the optical tracking device. The system further includes an alignment controller configured to compare the reference axis based on the coordinate frame and the boresight axis based on the reference image to calculate a three-dimensional misalignment angle between the reference axis and the boresight axis. The alignment controller can further be configured to implement vector matrix calculations to convert the three-dimensional misalignment angle to a coordinate frame transformation and to adjust the reference orientation by the three-dimensional misalignment angle to provide an adjusted reference axis that is aligned with the boresight axis.

BRIEF DESCRIPTION OF THE DRAWINGS

FIG. 1 is an example block diagram of a navigation system.
FIG. 2 is an example of a navigation system.
FIG. 3 is an example of a method for aligning an optical axis with an inertial navigation system (INS) coordinate frame.

DETAILED DESCRIPTION

This description relates generally to sensor systems, and more particularly to alignment of a coordinate frame with a boresight axis of an optical tracking device. A navigation system includes an inertial navigation system (INS) and an optical tracking device. The INS can be configured as an assembly that includes a variety of inertial sensors (e.g., gyroscopes, accelerometers, magnetometers, etc.) that provide a coordinate frame that is an inertial reference corresponding to an orientation of a movable platform (e.g., vehicle) on which the INS is included. As described herein, the coordinate frame corresponds to an inertial orientation of the movable platform in three-dimensional space that is defined by and updated by an output of at least one inertial sensor in response to motion (e.g., roll, pitch, and yaw) of the movable platform. Therefore, the coordinate frame provided by the INS can demonstrate an orientation of the movable platform relative to a geodetic coordinate system (e.g., the fixed Earth geodetic frame that includes North, East, and Down). For example, the INS can determine an orientation relative to the geodetic coordinate system using known techniques such as gyrocompass alignment, such as to simultaneously observe the direction of the gravity vector and the Earth rotation rate vector, or equivalent methods.

The coordinate frame includes a reference axis that has a reference orientation relative to physical axes of the INS. As described herein, the reference axis can correspond to a virtual axis that is referenced to the coordinate frame of the INS, such as by a three-dimensional virtual angle with respect to physical orthogonal axes from which the coordinate frame of the INS is defined. As also described herein, the reference orientation can correspond to the three-dimensional rotation angle between the reference axis and one of the physical orthogonal axes from which the coordinate frame of the INS is defined. As an example, the reference orientation can correspond to a three-dimensional angular offset between the reference axis and a forward axis of the INS. Therefore, at any given time, the INS can identify a relationship between the coordinate frame and the reference axis based on the reference orientation. As an example, the INS can include a memory (e.g., a nonvolatile memory) that is configured to store the reference orientation.

In addition, the navigation system includes an optical tracking device (e.g., a telescope, star tracker, camera, laser, or other optical device) that is configured to obtain reference images to determine an orientation of a boresight axis of the optical tracking device. The reference image can be a celestial image (e.g., star tracking), or can correspond to a known fixed feature (e.g., topographical feature). As an example, the reference images can be compared with a position reference database, such as configured as a lookup table or a catalog that is configured to provide known positions of reference features (e.g., celestial bodies) at specific times and from specific locations. Therefore, during normal operation of the navigation system, the orientation of the INS can be refined based on the obtained reference images. As an example, during normal operation of the navigation system, the reference axis of the INS and the boresight axis of the optical tracking device can be approximately aligned.

Certain conditions can cause an angular misalignment (e.g., in three-dimensions) between the boresight axis and the reference axis. As an example, the angular misalignment can occur during manufacture of the navigation system. As another example, kinetic shock can cause a physical misalignment of the optical tracking device relative to the INS, thereby causing the angular misalignment between the boresight axis and the reference axis. Such angular misalignment can result in errors in attitude or position of the movable platform. Further, if the INS attitude is used to point the optical tracking device to obtain the reference images, then the angular misalignment can result in pointing errors. Such pointing errors can render it more difficult and time-consuming to acquire the reference images.

To correct angular misalignment between the boresight axis and the reference axis of the INS, the navigation system includes an alignment controller that is configured to compare the reference axis, as provided by the coordinate frame of the INS, and the boresight axis, as provided by the reference image, to calculate a misalignment angle in three-dimensional space. The alignment controller can implement vector matrix calculations to convert the misalignment angle to a coordinate frame transformation and to adjust the reference orientation by the misalignment angle to provide an adjusted reference axis that is aligned with the boresight axis. Therefore, by aligning the reference axis to the boresight axis, the navigation system can be sufficiently calibrated to provide more effective inertial measurements in providing an orientation of an associated movable platform.

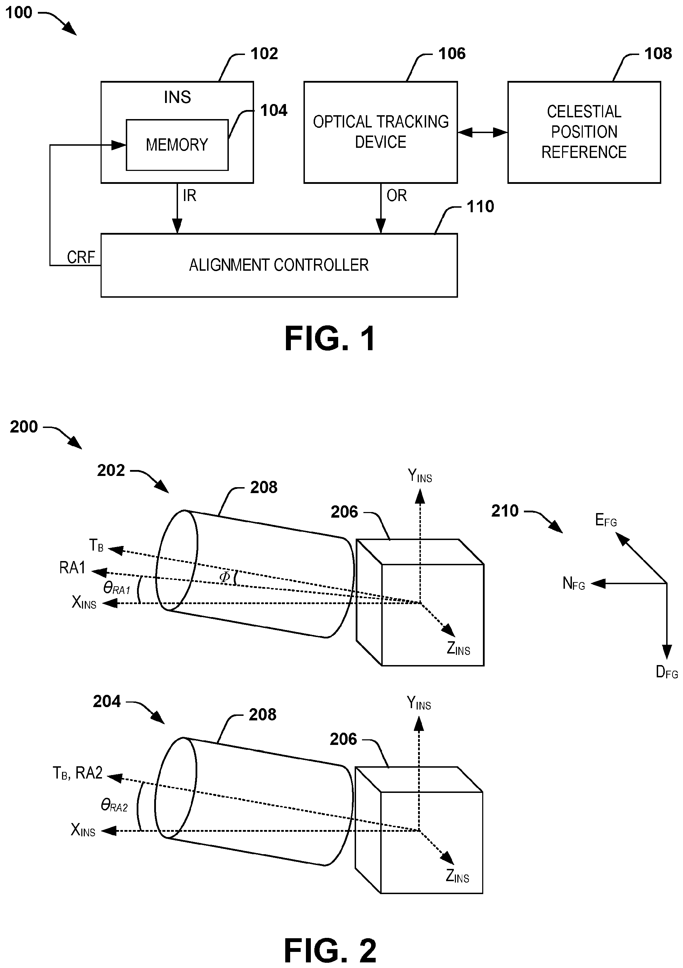

FIG. 1 is an example block diagram of a navigation system 100. The navigation system 100 can be implemented on a movable platform, such as any of a variety of vehicles (e.g., an aircraft or a spacecraft). The navigation system 100 can be implemented to determine an orientation of the movable platform in three-dimensional space, such as with respect to a geodetic coordinate system (e.g., North, East, and Down).

The navigation system 100 includes an inertial navigation system (INS) 102. The INS 102 can be configured as a combination hardware and software tool that includes inertial sensors and one or more processors to provide inertial data associated with the inertial sensors. As an example, the INS 102 can include one or more gyroscopes, magnetometers, and/or accelerometers that can provide inertial data, such that the INS 102 provides the inertial data to controls associated with the movable platform. The INS 102 therefore provides a coordinate frame, demonstrated in the example of FIG. 1 as a signal IR, corresponding to an orientation of the movable platform on which the INS 102 is included relative to the geodetic coordinate system.

The coordinate frame includes a reference axis that has a defined reference orientation relative to physical axes of the INS 102. Therefore, at any given time, the INS can identify a relationship between the coordinate frame and the reference axis based on the reference orientation. In the example of FIG. 1, the INS 102 includes a memory 104. The memory 104 can be a nonvolatile memory that is configured to store the reference orientation of the reference axis, such as the rotation angle between the reference axis and one or more of the physical axes of the coordinate frame of the INS 102. As an example, the reference orientation can correspond to a three-dimensional angular offset between the reference axis and a forward axis of the INS 102, the forward axis corresponding to an axis that is intended to designate a forward direction of the INS 102. The memory 104 can thus facilitate access of the reference orientation to provide the reference axis upon initialization (e.g., power-up) of the movable platform.

The navigation system 100 also includes an optical tracking device 106. The optical tracking device 106 can be arranged, for example, as a telescope, star tracker, camera, laser, or other optical device that is configured to obtain one or more reference images to determine an orientation of a boresight axis of the optical tracking device 106. In the example of FIG. 1, the navigation system 100 includes a position reference database 108 that is configured to provide known positions of reference structures, such as celestial bodies, at specific times and from specific locations. As an example, the position reference database 108 can be configured as a lookup table or a catalog that is able to provide or calculate the known positions of reference structures at specific times and from specific locations. As a first example, the optical tracking device 106 can obtain a single reference image for comparison with the position reference database 108. As another example, the optical tracking device 106 can obtain multiple reference images for comparison with the position reference database 108, such as successively or over a duration of time. The multiple reference images can correspond to multiple reference images of the same reference structure, such as from different orientations of the boresight axis or approximately the same orientation of the boresight axis, or can be multiple reference images of different reference structures (e.g., different celestial bodies).

In the example of FIG. 1, based on the obtained reference image relative to the data provided by the position reference database 108, the optical tracking device 106 provides a boresight orientation, demonstrated in the example of FIG. 1 as a signal OR, corresponding to an orientation of the boresight axis. The boresight orientation OR can correspond to the orientation of the boresight axis based on a single reference image, or based on the multiple reference images. As an example, the optical tracking device 106 can implement an aggregation algorithm (e.g., averaging) to determine the boresight orientation OR based on the multiple reference images. Therefore, the boresight orientation OR can be determined based on an aggregation of the multiple reference images.

As an example, during normal operation of the navigation system 100, the reference axis of the INS 102 and the boresight axis of the optical tracking device 106 can be approximately aligned. Therefore, during normal operation of the navigation system 100, the orientation of the INS 102 can be refined based on the obtained reference images OR by the optical tracking device 106. However, certain conditions can cause an angular misalignment between the boresight axis of the optical tracking device 106 and the reference axis of the INS 102. As an example, the angular misalignment can occur during manufacture of the navigation system 100. As another example, kinetic shock can cause a physical misalignment of the optical tracking device 106 relative to the INS 102, thereby causing the angular misalignment between the boresight axis and the reference axis. Because the reference axis is referenced to the coordinate frame (e.g., by the reference orientation), such angular misalignment between the boresight axis and the reference axis can result in errors in attitude or position of the movable platform. Further, if the attitude of the INS 102 is used to point the optical tracking device 106 to obtain the reference images, then the angular misalignment can result in pointing errors. Such pointing errors can render it more difficult and time-consuming to acquire the reference images.

In the example of FIG. 1, the navigation system 100 includes an alignment controller 110 that is configured to estimate and correct a three-dimensional angular misalignment between the boresight axis of the optical tracking device 106 and the reference axis of the INS 102. The alignment controller 110 is configured to receive the coordinate frame IR corresponding to the orientation of the INS 102 and the boresight orientation OR corresponding to the boresight axis of the optical tracking device 106. The alignment controller 110 thus compares the orientation of the INS 102, as provided by the coordinate frame IR, and the boresight orientation OR of the boresight axis of the optical tracking device 106 to provide an adjusted reference axis that is aligned with the boresight axis, thereby aligning the reference axis to the boresight axis. As described herein, the phrase "aligning the reference axis to the boresight axis" describes changing the virtual reference orientation, as stored in the memory 104, to align the virtual reference axis of the coordinate frame to be aligned to the physical boresight axis of the optical tracking device 106.

In the example of FIG. 1, the alignment controller 110 is demonstrated as providing a signal CRF to the memory 104 of the INS 102. For example, the signal CRF can correspond to correction factors to the reference orientation saved in the memory 104, or can correspond to an entirely updated reference orientation to be saved in the memory 104, thereby replacing the previously saved reference orientation. In either example, the updated reference orientation can provide a three-dimensional angular shift of the alignment of the virtual reference axis of the INS 102 to the physical boresight axis of the optical tracking device 106 to provide an adjusted reference axis. Accordingly, by aligning the reference axis to the boresight axis, the navigation system can be sufficiently calibrated to provide more effective inertial measurements in providing an orientation of the associated movable platform.

As an example, the alignment controller 110 can calculate the three-dimensional angular misalignment between the boresight axis of the optical tracking device 106 and the reference axis of the INS 102, and thus providing the signal CRF, based on providing the boresight orientation OR from a single reference image relative to the coordinate frame IR at a respective single instance. As another example, the angular misalignment between the boresight axis of the optical tracking device 106 and the reference axis of the INS 102, and thus the signal CRF, can be based on multiple boresight orientations OR relative to respective instances of the coordinate frame IR. For example, the optical tracking device 106 can obtain multiple reference images for comparison with the position reference database 108, such as successively or over a duration of time, with the multiple reference images corresponding to multiple reference images of the same reference structure from different orientations or the same orientation of the boresight axis, or can be multiple reference images of different reference structures (e.g., different celestial bodies), with each reference image providing the boresight orientation OR relative to a different instance of the coordinate frame IR. Therefore, the calculation of the angular misalignment between the boresight axis of the optical tracking device 106 and the reference axis of the INS 102, and thus the calculation of the correction factors of the signal CRF, can be based on an aggregation of the different reference images relative to the instances of the coordinate frame IR of the INS 102.

FIG. 2 is an example diagram 200 of a navigation system. The navigation system can correspond to a portion of the navigation system 100 described above in the example of FIG. 1. Therefore, reference is to be made to the example of FIG. 1 in the following description of the example of FIG. 2. In the example of FIG. 2, the navigation system is demonstrated in a first view 202 corresponding to a time prior to calibration and a second view 204 subsequent to calibration.

The navigation system 200 includes an INS 206 and an optical tracking device 208, demonstrated in respective three-dimensional representations. Similar to as described above, the INS 206 can be configured as a combination hardware and software tool that includes inertial sensors and one or more processors to provide inertial data associated with the inertial sensors. The INS 206 therefore provides the coordinate frame corresponding to an inertial orientation of the INS 206, and thus an orientation of a movable platform in which the INS 206 is included. In the example of FIG. 2, the INS 206 includes physical axes from which the coordinate frame can be provided relative to geodetic coordinates, demonstrated at 210. The geodetic coordinates 210 demonstrated as the Earth geodetic frame, thus including a North axis $N_{FG}$, an East axis $E_{FG}$, and a down axis $D_{FG}$ that are orthogonal with respect to each other. The physical axes include a first axis $X_{INS}$, a second axis $Y_{INS}$, and a third axis $Z_{INS}$ that are orthogonal with respect to each other. Therefore, the coordinate frame of the INS 206 can be defined based on an orientation of the physical axes relative to the geodetic coordinates 210, such as updated based on the output(s) of the inertial sensor(s).

The optical tracking device 208 can be arranged, for example, as a telescope, star tracker, camera, laser, or other optical device that is configured to obtain one or more reference images to determine an orientation of a boresight axis of the optical tracking device 208. In the example of FIG. 2, the boresight axis is demonstrated as an axis $T_B$ that is angularly offset from the axis $X_{INS}$ of the INS 206. As an example, the reference images captured by the optical tracking device 208 can be compared with the position reference database 108 to provide an orientation of the boresight axis $T_B$ relative to the geodetic coordinates 210, and thus the orientation of the movable platform on which the optical tracking device 208 is included.

In the first view 202, the diagram 200 includes an initial reference axis RA1. The reference axis RA1 is demonstrated as angularly offset in three-dimensional space from the first axis $X_{INS}$, which can correspond to a forward axis of the INS 206, by a three-dimensional angle $\theta_{RA1}$ corresponding to the reference orientation of the reference axis RA1 relative to the physical axes of the INS 206 (e.g., relative to the forward axis $X_{INS}$). The reference axis RA1 and the boresight axis $T_B$ can initially be intended to be collinear, such that the reference axis RA1 is intended to be aligned with the boresight axis $T_B$ in three-dimensional space. Therefore, during normal navigation operation, the INS 206 can be configured to correlate the reference images obtained by the optical tracking device 208 to the coordinate frame based on the angle $\theta_{RA1}$ relative to the forward axis $X_{INS}$.

As described in greater detail above, certain conditions can cause an angular misalignment between the boresight axis $T_B$ of the optical tracking device 208 and the reference axis. The reference axis RA1 is demonstrated in the first view 202 as angularly offset in three-dimensional space from the boresight axis $T_B$ by a three-dimensional misalignment angle $\Phi$. Therefore, while the misalignment angle $\Phi$ can be small (e.g., a fraction of a degree), the misalignment angle $\Phi$ can still cause significant errors in determining the orientation of the movable platform based on the combined determination of orientation by both the INS 206 and the optical tracking device 208, as described above.

The alignment controller 110 thus implements an alignment algorithm that includes comparing the reference axis RA1, thus corresponding to the orientation of the coordinate frame provided by the INS 206, with the orientation of the boresight axis $T_B$ to determine the misalignment angle $\Phi$. Upon determining the misalignment angle $\Phi$, as demonstrated in the second view 204, the alignment controller 110 implements the alignment algorithm to adjust an angular offset between the reference axis RA1 and the axis $X_{INS}$ from the angle $\theta_{RA1}$ to an angle $\theta_{RA2}$. Thus, the reference orientation of the initial reference axis RA1 is adjusted relative to the physical axes of the INS (e.g., by the misalignment angle $\Phi$), thereby aligning an adjusted virtual reference axis RA2 to the physical boresight axis $T_B$. Therefore, as demonstrated in the second view 204, the change in the reference orientation from the angle $\theta_{RA1}$ to an angle $\theta_{RA2}$ provides the adjusted reference axis RA2 that is aligned with the physical orientation defined by the boresight axis $T_B$, demonstrated as a collinear axis "$T_B$, RA2". Accordingly, the alignment controller 110 mitigates errors in the determination of the orientation of the movable platform, as provided by both the INS 206 and the optical tracking device 208, relative to the geodetic coordinates 210.

As an example, the alignment algorithm can be configured to implement vector matrix calculations to determine the misalignment angle $\Phi$ and to adjust the coordinate frame of the INS 206 to align the reference axis RA to the boresight axis $T_B$. For example, the orientation of the coordinate frame of the INS 206 with respect to the Earth geodetic frame can be expressed by the following matrix transformation:

$$C_B^G = \begin{bmatrix} cos\Psi cos\phi & -sin\Psi cos\theta + cos\Psi sin\phi sin\theta & sin\Psi sin\theta + cos\Psi sin\phi cos\theta \\ sin\Psi cos\phi & cos\Psi cos\theta + sin\Psi sin\phi sin\theta & -cos\Psi sin\theta + sin\Psi sin\phi cos\theta \\ -sin\phi & cos\phi sin\theta & cos\phi cos\theta \end{bmatrix}$$

Equation 1

Where: $\Psi$ is a True Heading of the INS 206, and can thus correspond to the reference axis RA, as demonstrated in the example of FIG. 2;

$\phi$ is a Pitch of the INS 206; and
$\theta$ is a Roll of the INS 206.

The alignment controller 110 can thus generate a body axis unit vector corresponding to the reference axis RA in the Earth geodetic frame based on Equation 1, as follows:

$$\vec{u}_B^{(G)} = C_B^G \begin{bmatrix} 1 \\ 0 \\ 0 \end{bmatrix} = \begin{bmatrix} cos\Psi cos\phi \\ sin\Psi cos\phi \\ -sin\phi \end{bmatrix} \qquad \text{Equation 2}$$

The alignment controller 110 can also provide a transformation from the boresight axis $T_B$ to the Earth geodetic frame. Because orientation about the boresight axis $T_B$ is initially unknown, the transformation boresight axis $T_B$ to the Earth geodetic frame can include only azimuth and elevation, and can be expressed by the unit vector in the direction of the boresight axis $T_B$ as follows:

$$\vec{u}_T^{(G)} = \begin{bmatrix} cosAz & -sinAz & 0 \\ sinAz & cosAz & 0 \\ 0 & 0 & 1 \end{bmatrix} \begin{bmatrix} cosE & 0 & sinE \\ 0 & 1 & 0 \\ -sinE & 0 & cosE \end{bmatrix} \begin{bmatrix} 1 \\ 0 \\ 0 \end{bmatrix} = \begin{bmatrix} cosAz\,cosE \\ sinAz\,cosE \\ -sinE \end{bmatrix}$$

Equation 3

Where: *Az* is the azimuth angle relative to North; and
*E* is the elevation angle relative to a local level plane.

The alignment controller 110 can implement a cross-product of the unit vectors $\vec{u}_B^{(G)}$ and $\vec{u}_T^{(G)}$ to define an axis of rotation for the misalignment angle $\Phi$, expressed in the Earth geodetic frame as follows:

$$\vec{\Phi}^{(G)} = \vec{u}_B^{(G)} \times \vec{u}_T^{(G)} \qquad \text{Equation 4}$$

The unit vector in the rotation direction from the reference axis RA to the boresight axis $T_B$ can therefore be expressed as a division of the vector cross-products by its magnitude, as follows:

$$\vec{u}_\Phi^{(G)} = \frac{\vec{u}_B^{(G)} \times \vec{u}_T^{(G)}}{\left\| \vec{u}_B^{(G)} \times \vec{u}_T^{(G)} \right\|} \qquad \text{Equation 5}$$

From Equation 5, the misalignment angle $\Phi$ can be calculated based on calculating an inverse tangent of the magnitude of the vector cross product of the reference axis RA unit vector and the boresight axis $T_B$ unit vector over a vector dot product of the reference axis RA unit vector and the boresight axis $T_B$, as follows:

$$\Phi = \tan^{-1}\left( \frac{\left\| \vec{u}_B^{(G)} \times \vec{u}_T^{(G)} \right\|}{\vec{u}_B^{(G)} \cdot \vec{u}_T^{(G)}} \right) \qquad \text{Equation 6}$$

Upon determining the misalignment angle $\Phi$, the alignment controller 110 can be configured to adjust the coordinate frame of the INS 206 to align the reference axis RA with the boresight axis $T_B$. The alignment controller 110 can convert the unit vector of the misalignment rotation $\vec{u}_\Phi^{(G)}$ to the body coordinates of the INS 206 by transforming through a transpose, expressed as $C_G^B$, of the orientation $C_B^G$ of the coordinate frame of the INS 206 provided in Equation 1, as follows:

$$\vec{u}_\Phi^{(B)} = C_G^B \vec{u}_\Phi^{(G)} \qquad \text{Equation 7}$$

As an example, the alignment controller 110 can implement Rodriquez' rotation equation to form a rotation matrix from the coordinate frame of the INS 206 to the boresight axis $T_B$, thus corresponding to a boresight correction matrix. The boresight correction matrix can be expressed as follows:

$$C_B^T = I + sin\Phi \left[ \vec{u}_\Phi^{(B)} x \right] + (1 - cos\Phi) \left[ \vec{u}_\Phi^{(B)} x \right]^2 \qquad \text{Equation 8}$$

Where:I is the identity matrix; and
$[\vec{u}x]$ is the skew symmetric matrix.
The skew symmetric matrix $[\vec{u}x]$ can be expressed as follows:

$$[\vec{u}x] = \begin{bmatrix} 0 & -u_z & u_y \\ u_z & 0 & -u_x \\ -u_y & u_x & 0 \end{bmatrix} \qquad \text{Equation 9}$$

By using the boresight correction matrix $C_B^T$ of Equation 8, the alignment controller 110 can resolve the attitude of the INS 206 to the boresight axis $T_B$ by implementing the coordinate frame matrix $C_B^G$ and a transpose of the boresight correction matrix, as follows:

$$C_T^G = C_B^G C_T^B \qquad \text{Equation 10}$$

The alignment controller 110 can thus extract corrected roll, pitch, and true heading (e.g., reference axis RA) from the matrix $C_T^G$ of Equation 10. The alignment controller 110 can thus save the corrected roll, pitch, and true heading to the memory 104 as the updated reference orientation (e.g., the three-dimensional angle $\theta_{RA2}$). The alignment controller 110 can also store the transformation $C_B^T$ in memory 104 for future use when initializing the INS 206, such that the INS 206 can define the reference axis RA based on the three-dimensional angle $\theta_{RA2}$ stored in the memory 104 to align the reference axis RA to the boresight axis $T_B$ at initialization. As a result, the alignment controller 110 can mitigate errors resulting from

the misalignment angle $\Phi$ between the reference axis RA of the coordinate frame of the INS 206 and the boresight axis $T_B$ of the optical tracking device 208.

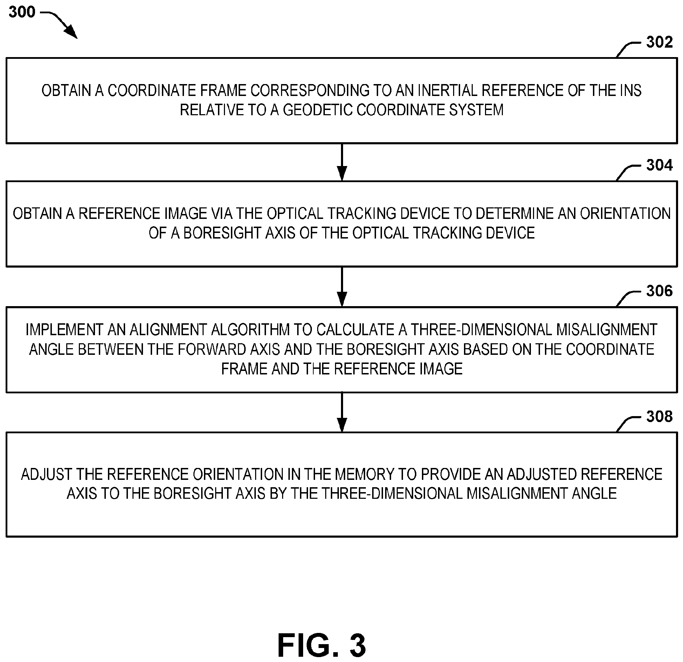

In view of the foregoing structural and functional features described above, an example method will be better appreciated with reference to FIG. 3. While, for purposes of simplicity of explanation, the method is shown and described as executing serially, it is to be understood and appreciated that the method is not limited by the illustrated order, as parts of the method could occur in different orders and/or concurrently from that shown and described herein. Such method can be executed by various components configured in an integrated circuit, processor, or a controller, for example.

FIG. 3 illustrates an example of a method 300 for aligning a boresight axis (e.g., the boresight axis $T_B$) of an optical tracking device (e.g., the optical tracking device 106) with a coordinate frame of an INS (e.g., the INS 102). At 302, a coordinate frame corresponding to an inertial reference of the INS is obtained. The coordinate frame includes a reference axis (e.g., the reference axis RA1) having a reference orientation relative to physical axes of the INS. At 304, a reference image is obtained via the optical tracking device to determine an orientation of the boresight axis of the optical tracking device. At 306, an alignment algorithm is implemented to calculate a three-dimensional misalignment angle (e.g., the misalignment angle $\Phi$) between the reference axis and the boresight axis based on the coordinate frame and the reference image. At 308, the reference orientation is adjusted in the memory to provide an adjusted reference axis (e.g., the reference axis RA2) to the boresight axis by the three-dimensional misalignment angle.

What have been described above are examples of the invention. It is, of course, not possible to describe every conceivable combination of components or methodologies for purposes of describing the invention, but one of ordinary skill in the art will recognize that many further combinations and permutations of the invention are possible. Accordingly, the invention is intended to embrace all such alterations, modifications, and variations that fall within the scope of this application, including the appended claims. Additionally, where the disclosure or claims recite "a," "an," "a first," or "another" element, or the equivalent thereof, it should be interpreted to include one or more than one such element, neither requiring nor excluding two or more such elements. As used herein, the term "includes" means includes but not limited to, and the term "including" means including but not limited to. The term "based on" means based at least in part on.

**Claims**

1. A navigation system (100, 200) comprising:

   an inertial navigation system, INS (102, 206), that is configured to provide a coordinate frame (IR) corresponding to an inertial reference of the INS (102, 206) relative to a geodetic coordinate system (210, $E_{FG}$, $N_{FG}$, $D_{FG}$), the coordinate frame (IR) comprising a reference axis (RA1) having a reference orientation ($\theta_{RA1}$) relative to physical axes ($X_{INS}$, $Y_{INS}$, $X_{INS}$) of the INS (102, 206);
   an optical tracking device (106,208) configured to obtain reference images to determine an orientation (OR) of a boresight axis ($T_B$) of the optical tracking device (106,208) wherein the reference image is a structure that corresponds to a known position; and
   an alignment controller (110) configured to compare the reference axis (RA1) based on the coordinate frame (IR) and the boresight axis ($T_B$) based on the reference image to determine a three-dimensional angular misalignment between the reference axis (RA1) and the boresight axis ($T_B$), and to adjust the reference orientation ($\theta_{RA1}$) to provide an adjusted reference axis (RA2) that is aligned with the boresight axis ($T_B$) based on the determined three-dimensional angular misalignment.

2. The system of claim 1, wherein the reference orientation ($\theta_{RA1}$) is saved in a memory (104), wherein the alignment controller (110) is configured to adjust the reference orientation ($\theta_{RA1}$) in the memory to provide the adjusted reference axis (RA2) aligned with the boresight axis ($T_B$).

3. The system of claim 1, wherein the alignment controller (110) is configured to implement an alignment algorithm to calculate a three-dimensional misalignment angle ($\Phi$) between the reference axis (RA1) and the boresight axis ($T_B$), wherein the alignment controller (110) is configured to adjust the reference orientation ($\theta_{RA1}$) by the three-dimensional misalignment angle ($\Phi$) to provide the adjusted reference axis (RA2).

4. The system of claim 3, wherein the alignment algorithm comprises defining the reference axis (RA1) as a reference axis unit vector and the boresight axis ($T_B$) as a boresight axis unit vector, calculating a vector cross product of the reference axis and boresight axis unit vectors to determine an axis of rotation of the three-dimensional misalignment angle ($\Phi$), and calculating the three-dimensional misalignment angle ($\Phi$) based on the axis of rotation of the three-dimensional misalignment angle ($\Phi$).

5. The system of claim 4, wherein the calculating the three-dimensional misalignment angle ($\Phi$) comprises calculating an inverse tangent of the magnitude of the vector cross product of the reference axis and boresight axis unit vectors over a vector dot product of the reference axis and boresight axis unit vectors.

6. The system of claim 4, wherein the alignment algorithm further comprises determining a unit vector of the axis of rotation based on the vector cross product, wherein the alignment algorithm further comprises converting the unit vector of the axis of rotation of the three-dimensional misalignment angle ($\Phi$) to the coordinate frame (IR).

7. The system of claim 3, wherein the alignment algorithm further comprises converting the three-dimensional misalignment angle ($\Phi$) to the coordinate frame (IR) through vector matrix calculations.

8. The system of claim 1, wherein the optical tracking device (106, 208) is configured to obtain a plurality of reference images to determine the orientation (OR) of the boresight axis ($T_B$) based on an aggregation of the plurality of reference images.

9. The system of claim 8, wherein each of the plurality of reference images corresponds to a different reference structure.

10. A movable platform comprising the navigation system of claim 1.

11. The system of any of the preceding claims, wherein the position reference is arranged as a lookup table or a catalog that is able to provide or calculate the known positions of the reference structure at specific times and from specific locations.

12. The system of any of the preceding claims, wherein the reference structure is arranged as a celestial object.

13. A method for aligning a boresight axis ($T_B$) of an optical tracking device (106, 208) with a coordinate frame (IR) of an inertial navigation system, INS (102, 206), the method comprising:

obtaining a coordinate frame (IR) corresponding to an inertial reference of the INS relative to a geodetic coordinate system (210, $E_{FG}$, $N_{FG}$, $D_{FG}$) based on attitude measurements associated with a physical alignment of the INS, the coordinate frame (IR) comprising a reference axis (RA1) having a reference orientation ($\theta_{RA1}$) relative to physical axes ($X_{INS}$, $Y_{INS}$, $X_{INS}$) of the INS (102, 206);
obtaining a reference image of a structure that has a known position via the optical tracking device (106, 208) to determine an orientation (OR) of the boresight axis ($T_B$) of the optical tracking device (106, 208);
implementing an alignment algorithm to provide a transformation of the boresight axis to the geodetic coordinate system based on an azimuth and elevation of the optical tracking device and of the coordinate frame to the geodetic coordinate system based on the attitude measurements to calculate a three-dimensional misalignment angle ($\Phi$) between the reference axis (RA1) and the boresight axis ($T_B$) based on the coordinate frame (IR) and the reference image; and
adjusting the reference orientation ($\theta_{RA1}$) in the memory to provide an adjusted reference axis (RA2) to the boresight axis ($T_B$) by the three-dimensional misalignment angle ($\Phi$).

14. The method of claim 13, wherein implementing the alignment algorithm comprises:

defining the reference axis (RA1) as a reference axis unit vector and the boresight axis ($T_B$) as a boresight axis unit vector;
calculating a vector cross product of the reference axis and boresight axis unit vectors to determine an axis of rotation of the three-dimensional misalignment angle ($\Phi$); and
calculating the three-dimensional misalignment angle ($\Phi$) based on the axis of rotation of the three-dimensional misalignment angle ($\Phi$).

15. The method of claim 14, wherein the calculating the three-dimensional misalignment angle ($\Phi$) comprises calculating an inverse tangent of the magnitude of the vector cross product of the reference axis and boresight axis unit vectors over a vector dot product of the reference axis and boresight axis unit vectors.

16. The method of claim 14, wherein implementing the alignment algorithm further comprises:

determining a unit vector of the axis of rotation based on the vector cross product; and

converting the unit vector of the axis of rotation of the three-dimensional misalignment angle ($\Phi$) to the coordinate frame (IR).

17. The method of claim 13, wherein obtaining the reference image comprises obtaining a plurality of reference images via the optical tracking device (106, 208) to determine the orientation of the boresight axis ($T_B$) based on an aggregation of the plurality of reference images.

18. The method of claim 13, further comprising:

storing the reference orientation ($\theta_{RA1}$) in the memory; and
accessing the memory to obtain the reference orientation ($\theta_{RA1}$) to provide the adjusted reference axis (RA2) aligned with the boresight axis ($T_B$) at initialization of the INS.

**Patentansprüche**

1. Ein Navigationssystem (100, 200), das folgende Merkmale aufweist:

ein Trägheitsnavigationssystem, INS (102, 206), das dazu konfiguriert ist, einen Koordinatenrahmen (IR) entsprechend einer Trägheitsreferenz des INS (102, 206) relativ zu einem geodätischen Koordinatensystem (210, $E_{FG}$, $N_{FG}$, $D_{FG}$) bereitzustellen, wobei der Koordinatenrahmen (IR) eine Referenzachse (RA1) aufweist, die eine Referenzorientierung ($\theta_{RA1}$) relativ zu physischen Achsen ($X_{INS}$, $Y_{INS}$, $X_{INS}$) des INS (102, 206) aufweist; eine optische Nachverfolgungsvorrichtung (106, 208), die dazu konfiguriert ist, Referenzbilder zu erhalten, um eine Orientierung (OR) einer Visierachse ($T_B$) der optischen Nachverfolgungsvorrichtung (106, 208) zu bestimmen, wobei das Referenzbild eine Struktur ist, die einer bekannten Position entspricht; und eine Ausrichtungssteuerung (110), die dazu konfiguriert ist, die Referenzachse (RA1) basierend auf dem Koordinatenrahmen (IR) und die Visierachse ($T_B$) basierend auf dem Referenzbild zu vergleichen, um einen dreidimensionalen Winkelversatz zwischen der Referenzachse (RA1) und der Visierachse ($T_B$) zu bestimmen, und die Referenzorientierung ($\theta_{RA1}$) anzupassen, um eine angepasste Referenzachse (RA2), die auf die Visierachse ($T_B$) ausgerichtet ist, basierend auf dem bestimmten dreidimensionalen Winkelversatz bereitzustellen.

2. Das System gemäß Anspruch 1, wobei die Referenzorientierung ($\theta_{RA1}$) auf einem Speicher (104) gespeichert ist, wobei die Ausrichtungssteuerung (110) dazu konfiguriert ist, die Referenzorientierung ($\theta_{RA1}$) auf dem Speicher anzupassen, um die auf die Visierachse ($T_B$) ausgerichtete angepasste Referenzachse (RA2) bereitzustellen.

3. Das System gemäß Anspruch 1, wobei die Ausrichtungssteuerung (110) dazu konfiguriert ist, einen Ausrichtungsalgorithmus zu implementieren, um einen dreidimensionalen Versatzwinkel ($\Phi$) zwischen der Referenzachse (RA1) und der Visierachse ($T_B$) zu berechnen, wobei die Ausrichtungssteuerung (110) dazu konfiguriert ist, die Referenzorientierung ($\theta_{RA1}$) um den dreidimensionalen Versatzwinkel ($\Phi$) anzupassen, um die angepasste Referenzachse (RA2) bereitzustellen.

4. Das System gemäß Anspruch 3, wobei der Ausrichtungsalgorithmus ein Definieren der Referenzachse (RA1) als Einheitsvektor der Referenzachse und der Visierachse ($T_B$) als Einheitsvektor der Visierachse, ein Berechnen eines Vektorkreuzprodukts aus den Einheitsvektoren der Referenzachse und der Visierachse, um eine Drehachse des dreidimensionalen Versatzwinkels ($\Phi$) zu bestimmen, und ein Berechnen des dreidimensionalen Versatzwinkels ($\Phi$) basierend auf der Drehachse des dreidimensionalen Versatzwinkels ($\Phi$) aufweist.

5. Das System gemäß Anspruch 4, wobei das Berechnen des dreidimensionalen Versatzwinkels ($\Phi$) ein Berechnen eines Kehrwerts des Tangens der Größe eines Vektorkreuzprodukts der Einheitsvektoren der Referenzachse und der Visierachse, geteilt durch ein Vektorskalarprodukt der Einheitsvektoren der Referenzachse und der Visierachse aufweist.

6. Das System gemäß Anspruch 4, wobei der Ausrichtungsalgorithmus ferner ein Bestimmen eines Einheitsvektor der Drehachse basierend auf dem Vektorkreuzprodukt aufweist, wobei der Ausrichtungsalgorithmus ferner ein Umwandeln des Einheitsvektors der Drehachse des dreidimensionalen Versatzwinkels ($\Phi$) in den Koordinatenrahmen (IR) aufweist.

7. Das System gemäß Anspruch 3, wobei der Ausrichtungsalgorithmus ferner ein Umwandeln des dreidimensionalen Versatzwinkels ($\Phi$) in den Koordinatenrahmen (IR) durch Vektormatrixberechnungen aufweist.

8. Das System gemäß Anspruch 1, wobei die optische Nachverfolgungsvorrichtung (106, 208) dazu konfiguriert ist, eine Mehrzahl von Referenzbildern zu erhalten, um die Orientierung (OR) der Visierachse ($T_B$) basierend auf einer Ansammlung der Mehrzahl von Referenzbildern zu bestimmen.

9. Das System gemäß Anspruch 8, wobei jedes der Mehrzahl von Referenzbildern einer unterschiedlichen Referenzstruktur entspricht.

10. Eine bewegliche Plattform, die das Navigationssystem gemäß Anspruch 1 aufweist.

11. Das System gemäß einem der vorhergehenden Ansprüche, wobei die Positionsreferenz als eine Nachschlagtabelle oder ein Verzeichnis angeordnet ist, die/das in der Lage ist, die bekannten Positionen der Referenzstruktur zu bestimmten Zeiten und von bestimmten Standorten bereitzustellen oder zu berechnen.

12. Das System gemäß einem der vorhergehenden Ansprüche, wobei die Referenzstruktur als ein Himmelsobjekt angeordnet ist.

13. Ein Verfahren zum Ausrichten einer Visierachse ($T_B$) einer optischen Nachverfolgungsvorrichtung (106, 208) mit einem Koordinatenrahmen (IR) eines Trägheitsnavigationssystems, INS (102, 206), wobei das Verfahren folgende Schritte aufweist:

> Erhalten eines Koordinatenrahmens (IR) entsprechend einer Trägheitsreferenz des INS relativ zu einem geodätischen Koordinatensystem (210, $E_{FG}$, $N_{FG}$, $D_{FG}$) basierend auf zu einer physischen Ausrichtung des INS zugeordneten Einstellungsmessungen, wobei der Koordinatenrahmen (IR) eine Referenzachse (RA1) mit einer Referenzorientierung ($\theta_{RA1}$) relativ zu physischen Achsen ($X_{INS}$, $Y_{INS}$, $X_{INS}$) des INS (102, 206) aufweist;
> Erhalten eines Referenzbilds einer Struktur mit einer bekannten Position über die optische Nachverfolgungsvorrichtung (106, 208), um eine Orientierung (OR) der Visierachse ($T_B$) der optischen Nachverfolgungsvorrichtung (106, 208) zu bestimmen;
> Implementieren eines Ausrichtungsalgorithmus, um eine Transformation der Visierachse zu dem geodätischen Koordinatensystem basierend auf einem Azimut und einer Elevation der optischen Nachverfolgungsvorrichtung und des Koordinatenrahmens auf das geodätische Koordinatensystem basierend auf den Einstellungsmessungen bereitzustellen, um einen dreidimensionalen Versatzwinkel ($\Phi$) zwischen der Referenzachse (RA1) und der Visierachse ($T_B$) basierend auf dem Koordinatenrahmen (IR) und der Referenzaufnahme zu berechnen; und
> Anpassen der Referenzorientierung ($\theta_{RA1}$) in dem Speicher, um der Visierachse ($T_B$) eine um den dreidimensionalen Versatzwinkel ($\Phi$) angepasste Referenzachse (RA2) bereitzustellen.

14. Das Verfahren gemäß Anspruch 13, wobei das Implementieren des Ausrichtungsalgorithmus folgende Schritte aufweist:

> Definieren der Referenzachse (RA1) als Einheitsvektor der Referenzachse und der Visierachse ($T_B$) als Einheitsvektor der Visierachse;
> Berechnen eines Vektorkreuzprodukts der Einheitsvektoren der Referenzachse und der Visierachse, um eine Drehachse des dreidimensionalen Versatzwinkels ($\Phi$) zu bestimmen; und
> Berechnen des dreidimensionalen Versatzwinkels ($\Phi$) basierend auf der Drehachse des dreidimensionalen Versatzwinkels ($\Phi$).

15. Das Verfahren gemäß Anspruch 14, wobei das Berechnen des dreidimensionalen Versatzwinkels ($\Phi$) ein Berechnen eines Kehrwerts des Tangens der Größe eines Vektorkreuzprodukts der Einheitsvektoren der Referenzachse und der Visierachse, geteilt durch ein Vektorskalarprodukt der Einheitsvektoren der Referenzachse und der Visierachse aufweist.

16. Das Verfahren gemäß Anspruch 14, wobei das Implementieren des Ausrichtungsalgorithmus ferner folgende Schritte aufweist:

> Bestimmen eines Einheitsvektors der Drehachse basierend auf dem Vektorkreuzprodukt; und
> Umwandeln des Einheitsvektors der Drehachse des dreidimensionalen Versatzwinkels ($\Phi$) in dem Koordinaten-

rahmen (IR).

**17.** Das Verfahren gemäß Anspruch 13, wobei das Erhalten des Referenzbilds ein Erhalten einer Mehrzahl von Referenzbildern über die optische Nachverfolgungsvorrichtung (106, 208) aufweist, um basierend auf einer Ansammlung der Mehrzahl von Referenzaufnahmen die Orientierung der Visierachse ($T_B$) zu bestimmen.

**18.** Das Verfahren gemäß Anspruch 13, das ferner folgende Schritte aufweist:

Speichern der Referenzorientierung ($\theta_{RA1}$) in dem Speicher; und
Zugreifen auf den Speicher, um die Referenzorientierung ($\theta_{RA1}$) zu erhalten, um bei der Initialisierung des INS die auf die Visierachse ($T_B$) ausgerichtete angepasste Referenzachse (RA2) bereitzustellen.

**Revendications**

**1.** Système de navigation (100, 200) comprenant :

un système de navigation inertielle, INS (102, 206), qui est configuré pour fournir un repère de coordonnées (IR) correspondant à une référence inertielle de l'INS (102, 206) par rapport à un système de coordonnées géodésique (210, $E_{FG}$, $N_{FG}$, $D_{FG}$), le repère de coordonnées (IR) comprenant un axe de référence (RA1) ayant une orientation de référence ($\theta_{RA1}$) par rapport aux axes physiques ($X_{INS}$, $Y_{INS}$, $X_{INS}$) de l'INS (102, 206) ;
un dispositif de suivi optique (106, 208) configuré pour obtenir des images de référence afin de déterminer une orientation (OR) d'un axe de visée ($T_B$) du dispositif de suivi optique (106, 208), dans lequel l'image de référence est une structure qui correspond à une position connue ; et
un contrôleur d'alignement (110) configuré pour comparer l'axe de référence (RA1) sur la base du repère de coordonnées (IR) et l'axe de visée ($T_B$) sur la base de l'image de référence pour déterminer un désalignement angulaire tridimensionnel entre l'axe de référence (RA1) et l'axe de visée ($T_B$), et pour ajuster l'orientation de référence ($\theta_{RA1}$) pour fournir un axe de référence ajusté (RA2) qui est aligné sur l'axe de visée ($T_B$) sur la base du désalignement angulaire tridimensionnel déterminé.

**2.** Système selon la revendication 1, dans lequel l'orientation de référence ($\theta_{RA1}$) est enregistrée dans une mémoire (104), dans lequel le contrôleur d'alignement (110) est configuré pour ajuster l'orientation de référence ($\theta_{RA1}$) dans la mémoire afin de fournir l'axe de référence ajusté (RA2) aligné sur l'axe de visée ($T_B$).

**3.** Système selon la revendication 1, dans lequel le contrôleur d'alignement (110) est configuré pour mettre en œuvre un algorithme d'alignement pour calculer un angle de désalignement tridimensionnel ($\Phi$) entre l'axe de référence (RA1) et l'axe de visée ($T_B$), dans lequel le contrôleur d'alignement (110) est configuré pour ajuster l'orientation de référence ($\theta_{RA1}$) par l'angle de désalignement tridimensionnel ($\Phi$) afin de fournir l'axe de référence ajusté (RA2).

**4.** Système selon la revendication 3, dans lequel l'algorithme d'alignement comprend la définition de l'axe de référence (RA1) comme vecteur unitaire d'axe de référence et de l'axe de visée ($T_B$) comme vecteur unitaire de l'axe de visée, le calcul d'un produit vectoriel croisé entre les vecteurs unitaires de l'axe de référence et de l'axe de visée afin de déterminer un axe de rotation de l'angle de désalignement tridimensionnel ($\Phi$), et le calcul de l'angle de désalignement tridimensionnel ($\Phi$) sur la base de l'axe de rotation de l'angle de désalignement tridimensionnel ($\Phi$).

**5.** Système selon la revendication 4, dans lequel le calcul de l'angle de désalignement tridimensionnel ($\Phi$) comprend le calcul d'une tangente inverse de la grandeur du produit vectoriel croisé entre les vecteurs unitaires de l'axe de référence et de l'axe de visée sur un produit scalaire vectoriel des vecteurs unitaires de l'axe de référence et de l'axe de visée.

**6.** Système selon la revendication 4, dans lequel l'algorithme d'alignement comprend en outre la détermination d'un vecteur unitaire de l'axe de rotation sur la base du produit vectoriel croisé, dans lequel l'algorithme d'alignement comprend en outre la conversion du vecteur unitaire de l'axe de rotation de l'angle de désalignement tridimensionnel ($\Phi$) dans le repère de coordonnées (IR).

**7.** Système selon la revendication 3, dans lequel l'algorithme d'alignement comprend en outre la conversion de l'angle de désalignement tridimensionnel ($\Phi$) dans le repère de coordonnées (IR) par des calculs de matrice vectorielle.

**8.** Système selon la revendication 1, dans lequel le dispositif de suivi optique (106, 208) est configuré pour obtenir une pluralité d'images de référence afin de déterminer l'orientation (OR) de l'axe de visée ($T_B$) sur la base d'une agrégation de la pluralité d'images de référence.

**9.** Système selon la revendication 8, dans lequel chacun des pluralités des images de référence correspond à une structure de référence différente.

**10.** Plateforme mobile comprenant le système de navigation selon la revendication 1.

**11.** Système selon l'une quelconque des revendications précédentes, dans lequel la référence de position est organisée sous la forme d'une table de consultation ou d'un catalogue capable de fournir ou de calculer les positions connues de la structure de référence à des moments spécifiques et à partir d'emplacements spécifiques.

**12.** Système selon l'une quelconque des revendications précédentes, dans lequel la structure de référence est agencée comme un objet céleste.

**13.** Procédé pour aligner un axe de visée ($T_B$) d'un dispositif de suivi optique (106, 208) avec un repère de coordonnées (IR) d'un système de navigation inertielle, INS (102, 206), le procédé comprenant :

obtenir un repère de coordonnées (IR) correspondant à une référence inertielle de l'INS par rapport à un système de coordonnées géodésiques (210, $E_{FG}$, $N_{FG}$, $D_{FG}$) sur la base de mesures d'attitude associées à un alignement physique de l'INS, le repère de coordonnées (IR) comprenant un axe de référence (RA1) ayant une orientation de référence ($\theta_{RA1}$) par rapport aux axes physiques ($X_{INS}$, $Y_{INS}$, $X_{INS}$) de l'INS (102, 206) ;
obtenir une image de référence d'une structure dont la position est connue via le dispositif de suivi optique (106, 208) afin de déterminer l'orientation (OR) de l'axe de visée ($T_B$) du dispositif de suivi optique (106, 208) ;
mettre en œuvre un algorithme d'alignement pour fournir une transformation de l'axe de visée vers le système de coordonnées géodésiques sur la base d'un azimut et d'une élévation du dispositif de suivi optique et du repère de coordonnées vers le système de coordonnées géodésiques sur la base des mesures d'attitude afin de calculer un angle de désalignement tridimensionnel ($\Phi$) entre l'axe de référence (RA1) et l'axe de visée ($T_B$) sur la base du repère de coordonnées (IR) et de l'image de référence ; et
ajuster l'orientation de référence ($\theta_{RA1}$) dans la mémoire afin de fournir un axe de référence ajusté (RA2) à l'axe de visée (TB) par l'angle de désalignement tridimensionnel ($\Phi$).

**14.** Procédé selon la revendication 13, dans lequel la mise en œuvre de l'algorithme d'alignement comprend :

**définir l'axe** de référence (RA1) comme vecteur unitaire de l'axe de référence et l'axe de visée ($T_B$) comme vecteur unitaire de l'axe de visée ;
calculer un produit vectoriel croisé des vecteurs unitaires de l'axe de référence et de l'axe de visée afin de déterminer un axe de rotation de l'angle de désalignement tridimensionnel ($\Phi$) ; et
calculer l'angle de désalignement tridimensionnel ($\Phi$) sur la base de l'axe de rotation de l'angle de désalignement tridimensionnel ($\Phi$).

**15.** Procédé selon la revendication 14, dans lequel le calcul de l'angle de désalignement tridimensionnel ($\Phi$) comprend le calcul d'une tangente inverse de la grandeur du produit vectoriel croisé des vecteurs unitaires de l'axe de référence et de l'axe de visée sur un produit scalaire vectoriel des vecteurs unitaires de l'axe de référence et de l'axe de visée.

**16.** Procédé selon la revendication 14, dans lequel la mise en œuvre de l'algorithme d'alignement comprend également :

déterminer un vecteur unitaire de l'axe de rotation sur la base du produit vectoriel ; et
convertir le vecteur unitaire de l'axe de rotation de l'angle de désalignement tridimensionnel ($\Phi$) dans le repère de coordonnées (IR).

**17.** Procédé selon la revendication 13, dans lequel l'obtention de l'image de référence comprend l'obtention d'une pluralité d'images de référence via le dispositif de suivi optique (106, 208) afin de déterminer l'orientation de l'axe de visée ($T_B$) sur la base d'une agrégation de la pluralité d'images de référence.

**18.** Procédé selon la revendication 13, comprenant en outre :

stocker l'orientation de référence ($\theta_{RA1}$) dans la mémoire ; et
accéder à la mémoire pour obtenir l'orientation de référence ($\theta_{RA1}$) afin de fournir l'axe de référence ajusté (RA2) aligné sur l'axe de visée ($T_B$) lors de l'initialisation de l'INS.

100

| 102 | | 106 | 108 |
|---|---|---|---|
| INS | 104 | OPTICAL TRACKING DEVICE | CELESTIAL POSITION REFERENCE |
| MEMORY | | | |

IR    OR

CRF

110

ALIGNMENT CONTROLLER

# FIG. 1

200

202

208

206

$Y_{INS}$

210

$E_{FG}$

$T_B$

RA1

$\theta_{RA1}$

$X_{INS}$

$\Phi$

$N_{FG}$

$Z_{INS}$

$D_{FG}$

204

208

206

$Y_{INS}$

$T_B$, RA2

$\theta_{RA2}$

$X_{INS}$

$Z_{INS}$

# FIG. 2

300

302

OBTAIN A COORDINATE FRAME CORRESPONDING TO AN INERTIAL REFERENCE OF THE INS RELATIVE TO A GEODETIC COORDINATE SYSTEM

304

OBTAIN A REFERENCE IMAGE VIA THE OPTICAL TRACKING DEVICE TO DETERMINE AN ORIENTATION OF A BORESIGHT AXIS OF THE OPTICAL TRACKING DEVICE

306

IMPLEMENT AN ALIGNMENT ALGORITHM TO CALCULATE A THREE-DIMENSIONAL MISALIGNMENT ANGLE BETWEEN THE FORWARD AXIS AND THE BORESIGHT AXIS BASED ON THE COORDINATE FRAME AND THE REFERENCE IMAGE

308

ADJUST THE REFERENCE ORIENTATION IN THE MEMORY TO PROVIDE AN ADJUSTED REFERENCE AXIS TO THE BORESIGHT AXIS BY THE THREE-DIMENSIONAL MISALIGNMENT ANGLE

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5672872 A